# FASCICULE DE BREVET EUROPEEN

(11) **EP 1 000 445 B1**
(45) Date de publication et mention de la délivrance du brevet: **04.10.2001**
(21) Numéro de dépôt: 98940345.6
(22) Date de dépôt: 27.07.1998
(51) Int. Cl.: H01Q 21/29, H04B 7/08, H04B 7/06

(54) **RESEAU D'ANTENNES POUR STATION DE BASE DE RADIOCOMMUNICATION AVEC DES MOBILES**
GRUPPENANTENNE FÜR BASISSTATION ZUR FUNKVERBINDUNG MIT MOBILEN TEILNEHMERN
ANTENNA NETWORK FOR BASE STATION RADIOCOMMUNICATION WITH MOBILE TELEPHONES

(30) Priorité: 28.07.1997 FR 9709572
(43) Date de publication de la demande: 17.05.2000
(73) Titulaire: FRANCE TELECOM, 75015 Paris (FR)
(72) Inventeur: MAYRARGUE, Sylvie, F-75013 Paris (FR)
(74) Mandataire: Loisel, Bertrand
(86) Numéro de dépôt international: FR9801658
(87) Numéro de publication internationale: WO9905755

(56) Documents cités:
- EP-A- 0 841 759
- WO-A-97/08849
- DE-A- 4 322 863
- US-A- 5 614 914
- US-A- 5 646 942
- MITSUHIKO MIZUNO ET AL: "APPLICATION OF ADAPTIVE ARRAY ANTENNAS TO RADIO COMMUNICATIONS" ELECTRONICS & COMMUNICATIONS IN JAPAN, PART I - COMMUNICATIONS, vol. 77, no. 2, février 1994, pages 48-58, XP000468597
- HORNEFFER M ET AL: "DIRECTED ANTENNAS IN THE MOBILE BROADBAND SYSTEM" PROCEEDINGS OF IEEE INFOCOM 1996. CONFERENCE ON COMPUTER COMMUNICATIONS, FIFTEENTH ANNUAL JOINT CONFERENCE OF THE IEEE COMPUTER AND COMMUNICATIONS SOCIETIES. NETWORKING THE NEXT GENERATION SAN FRANCISCO, MAR. 24 - 28, 1996, vol. VOL. 2, no. CONF. 15, 24 mars 1996, pages 704-712, XP000621337 INSTITUTE OF ELECTRICAL AND ELECTRONICS ENGINEERS

## Description

La présente invention concerne les réseaux d'antennes destinés à des stations de base de radiocommunication avec des mobiles. Elle trouve une application particulièrement importante dans les systèmes de radiotéléphonie cellulaire.

Le terme "réseau d'antennes" désigne l'ensemble constitué par des antennes proprement dites, c'est-à-dire des capteurs du signal hertzien, et des moyens de traitement qui leur sont associés et permettent en particulier de fournir un signal de réception final à partir des signaux reçus d'un mobile, par l'intermédiaire de trajets qui peuvent être multiples.

On connaît déjà des réseaux d'antennes destinés à concentrer l'énergie reçue en provenance d'un mobile par des trajets multiples. Pour cela, il est préférable que les capteurs soient mutuellement décorrélés. Cette décorrélation peut être obtenue par divers procédés. Par exemple, les antennes peuvent être prévues pour recevoir des signaux ayant des polarisations différentes. La solution la plus fréquente consiste cependant à utiliser des antennes suffisamment espacées les unes des autres. Si les trajets multiples sont répartis de façon sensiblement omnidirectionnelle autour du réseau d'antennes, un espacement des capteurs de l'ordre de la demi-longueur d'onde suffit à assurer la décorrélation. Cependant, les directions d'arrivée des différents trajets multiples sont généralement réparties dans un cône d'ouverture relativement faible. Une décorrélation des signaux impose alors de donner aux capteurs un espacement mutuel dépassant largement la demi-longueur d'onde et en général supérieur à une longueur d'onde.

Le réseau d'antennes doit également permettre, par traitement des signaux reçus provenant d'un mobile, de le localiser en direction de façon à permettre ultérieurement une émission vers le mobile avec concentration d'énergie vers ce dernier. Le traitement de localisation mentionné ci-dessus peut être "explicite" et mettre en oeuvre, par exemple, un procédé du type décrit dans l'article de ANDERSON S., MILLNERT M., VIBERG M., WAHLBERG B., "An adaptive array for mobile communication systems", IEEE Transactions on Vehicular Technology, Vol. 40, No. 1, February 1991, pages 230-236. Le traitement de localisation peut également être "implicite" et mettre en oeuvre, par exemple, un procédé du type décrit dans la demande de brevet français n° 96 13597.

Les réseaux d'antennes utilisés à l'heure actuelle ne permettent pas de réaliser simultanément les deux fonctions de localisation et de diversité de réception, permettant d'améliorer la réception, grâce au traitement de signaux mutuellement décorrélés.

En effet, actuellement, le même réseau d'antennes est généralement utilisé à la fois en réception et en émission. Un traitement de localisation satisfaisant n'est possible que si le réseau est dépourvu d'ambiguïté, c'est-à-dire de lobes secondaires d'amplitude comparable à l'amplitude du lobe principal. Pour plus de détails sur la notion d'ambiguïté de réseau, on se reportera utilement à la Thèse de A. FLIELLER, "Mise en oeuvre des méthodes à haute résolution en traitement d'antenne : autocalibration robuste et géométrie des réseaux", Thèse de l'Université de Paris-Sud, UFR Scientifique d'Orsay, 16 juin 1995.

Les réseaux les plus employés à l'heure actuelle sont des réseaux du type linéaire ou circulaire, à capteurs équirépartis. On sait que pour éviter l'ambiguïté dans ce type de réseau, les capteurs doivent être espacés d'une demi-longueur d'onde environ. Cela peut conduire à un très grand nombre de capteurs si la distance nécessaire pour assurer la décorrélation entre au moins deux capteurs est très grande par rapport à la longueur d'onde. Or, on cherche à limiter le nombre de capteurs, pour des raisons de coût et d'encombrement. Ce type de réseau connu présente donc des inconvénients.

Dans un contexte autre que celui des radiocommunications, certains auteurs ont suggéré d'utiliser des réseaux d'antennes dits lacunaires ou "sparse antennas", réseaux linéaires dont les antennes sont disposées de manière irrégulière. Cependant, même si la décorrélation entre les capteurs de tels réseaux est supérieure, à nombre égal de capteurs, à la décorrélation d'un réseau à capteurs équirépartis, elle est généralement insuffisante pour des conditions courantes de propagation. De plus, les réseaux du type "sparse antennas" sont très sensibles aux imperfections résultant du positionnement et de la calibration des capteurs.

La présente invention a pour but de pallier les inconvénients précités.

Dans ce but, l'invention propose notamment un réseau d'antennes pour station de base de radiocommunication avec des mobiles, comprenant N premiers capteurs, N étant un entier supérieur à 2, disposés de façon que le réseau ne présente sensiblement pas d'ambiguïté, un (N+1)^{ème} capteur placé ou conçu de façon à recevoir des signaux décorrélés des précédents, et un module de traitement des signaux reçus, permettant de localiser un mobile émetteur à partir des signaux reçus uniquement par les N capteurs, et de combiner ces signaux et les signaux reçus par le (N+1)^{ème} capteur pour améliorer la réception en réalisant une diversité spatiale ou spatio-temporelle.

Dans un mode particulier de réalisation de ce réseau d'antennes, la distance mutuelle entre les N premiers capteurs est de l'ordre de grandeur d'une demi-longueur d'onde de transmission, et le (N+1)^{ème} capteur est placé à une distance éventuellement réglable de chacun des N premiers capteurs, cette distance étant choisie de façon que la décorrélation soit assurée avec une probabilité supérieure à un seuil souhaité. Le choix de cette distance dépend du choix de ce seuil, ainsi que de la nature de la propagation des signaux, qui diffère selon l'environnement de propagation, par exemple selon que le milieu de propagation est du type urbain ou rural.

Dans un autre mode particulier de réalisation, les N premiers capteurs présentent une polarisation prédéterminée et le (N+1)^{ème} capteur présente une polarisation différente.

Dans encore un autre mode particulier de réalisation, les N premiers capteurs présentent un diagramme d'antenne ayant une géométrie d'un type prédéterminé et le (N+1)^{ème} capteur présente un diagramme d'antenne ayant une géométrie d'un type différent.

Dans un mode particulier de réalisation, chacun des N+1 capteurs comprend deux circuits distincts, un de ces circuits effectuant les traitements de réception et l'autre circuit effectuant les traitements éventuels d'émission.

D'autres caractéristiques et avantages de la présente invention apparaîtront mieux à la lecture de la description qui suit de modes particuliers de réalisation, donnés à titre d'exemples non limitatifs. La description se réfère aux dessins qui l'accompagnent, dans lesquels :
- les figures 1 à 3 représentent de façon schématique différents modes particuliers de réalisation d'un réseau d'antennes selon l'invention, l'échelle n'étant pas respectée pour plus de clarté ;
- la figure 4 représente de façon schématique une variante de réalisation d'un réseau d'antennes selon l'invention, dans laquelle chacun des capteurs comprend deux circuits distincts, l'échelle n'étant pas respectée pour plus de clarté ; et
- la figure 5 représente de façon schématique un mobile, ainsi qu'un réseau d'antennes conforme à un mode particulier de réalisation de l'invention, le module de traitement des signaux reçus étant représenté de façon schématique.

Dans toute la suite, on utilise le terme "capteur" au sens de "antenne proprement dite", c'est-à-dire faisant partie d'un réseau d'antennes tel que défini en introduction.

On rappelle que la réception en "diversité d'antenne", dans le domaine des radiocommunications, consiste à utiliser au moins deux capteurs pour recevoir des signaux provenant d'émetteurs, ces capteurs étant tels que les signaux qu'ils reçoivent sont statistiquement décorrélés. Cela permet en particulier de réduire la probabilité pour qu'un signal donné se trouve dans un état d'évanouissement ou "fading" simultanément sur tous les capteurs qui le reçoivent.

Dans le réseau d'antennes de l'invention, les capteurs utilisés pour la réception de signaux de trafic provenant de mobiles, constituent un ensemble qui n'est pas identique à l'ensemble de capteurs utilisé pour l'émission de signaux de trafic vers des mobiles.

En réception, conformément à un mode particulier de réalisation de la présente invention, on effectue deux principaux types de traitement : d'une part, un traitement de localisation de mobiles, "explicite" ou "implicite" (comme on l'a décrit plus haut), au moyen de N capteurs C₁, ..., C_{N}, et d'autre part, un traitement de démodulation de signaux reçus, au moyen de N+1 capteurs C₁, ..., C_{N}, C_{N+1} incluant en général les N capteurs déjà utilisés pour la localisation et utilisant dans tous les cas un capteur supplémentaire C_{N+1}, décorrélé des autres.

Le traitement de démodulation en réception peut mettre en oeuvre une méthode du type dit "MABP", décrite dans le document de brevet FR-A-2 716 761. Cette méthode, appliquée en réception, effectue un traitement spatio-temporel du signal utile.

On peut également utiliser une méthode classique d'identification dite "aveugle" du canal de propagation utile, ainsi que de celui des brouilleurs éventuels.

D'autres méthodes, prenant en compte à la fois la diversité et la réjection de brouilleurs, existent et sont utilisables.

On traite ainsi les signaux reçus. On peut encore utiliser pour cela d'autres techniques dont, à titre d'exemples non limitatifs, une technique de diversité par commutation, ou une technique de diversité par combinaison.
On se reportera utilement à ce sujet à l'ouvrage de W.C.Y. LEE intitulé "Mobile Communications Design Fundamentals", Sams 1986.

En revanche, en émission, dans le mode particulier de réalisation déjà décrit ci-dessus pour la réception, on utilise pour les signaux de trafic uniquement les N capteurs C₁, ... , C_{N}.

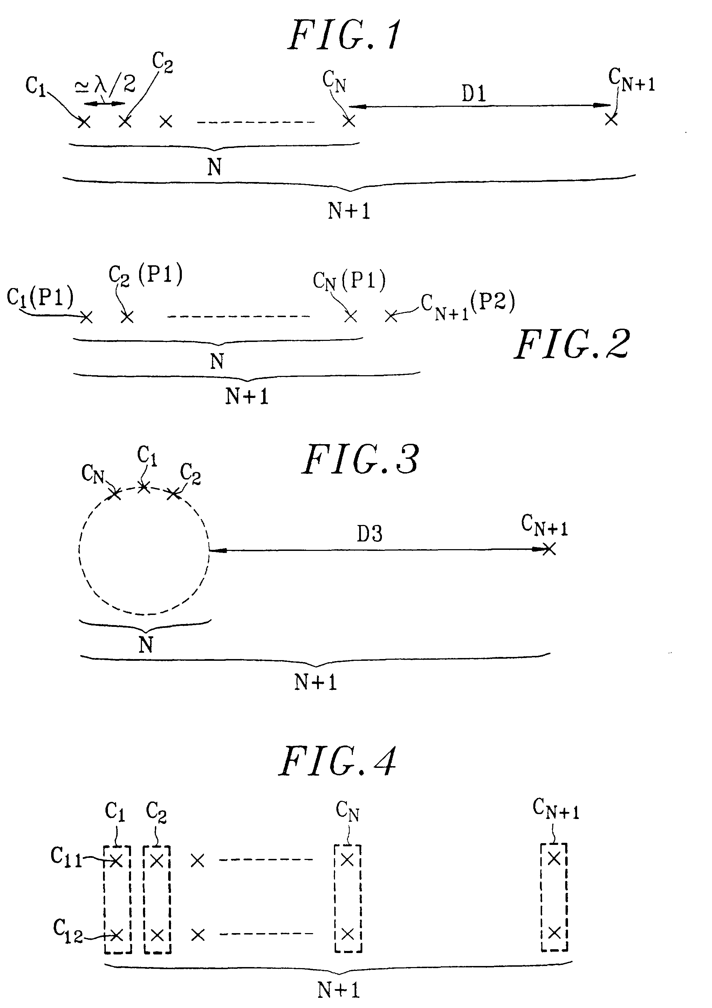

Les figures 1 à 3 illustrent chacune un mode particulier de réalisation d'un réseau d'antennes conforme à la présente invention.

Sur les figures 1 à 3, le réseau d'antennes comprend N+1 capteurs C₁, C₂, ..., C_{N}, C_{N+1}, où N est un entier supérieur à 2. Les N premiers capteurs C₁, ..., C_{N} sont disposés de façon qu'il n'y ait sensiblement pas d'ambiguïté de réseau.

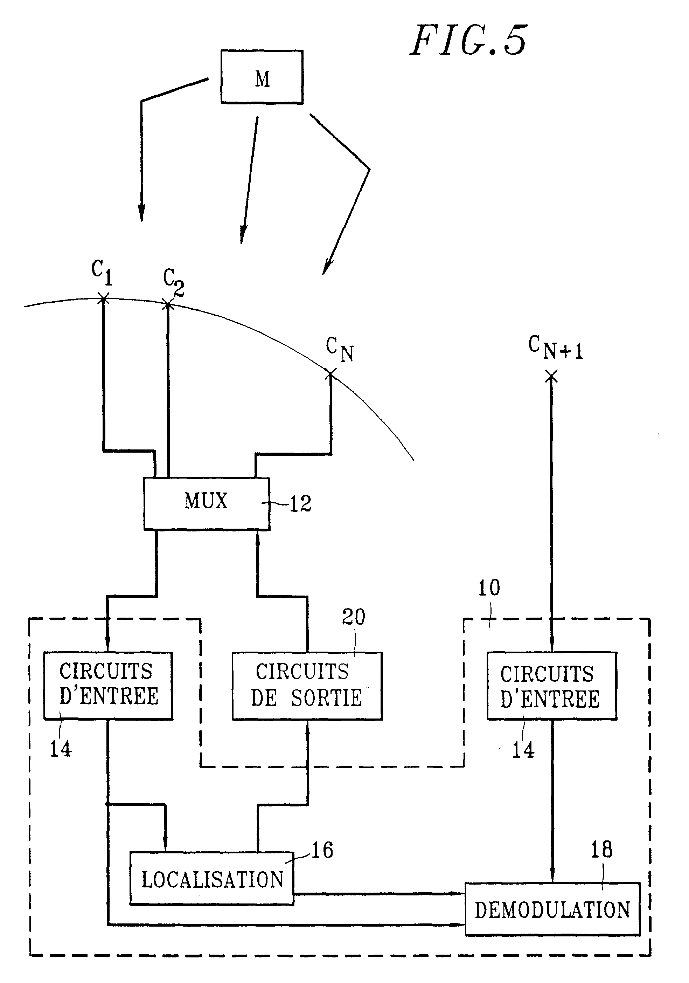

Ces N capteurs sont utilisés à la fois en réception et en émission : en réception, en relation avec un module de traitement des signaux reçus, désigné par le chiffre de référence 10 sur la figure 5, les N premiers capteurs permettent de localiser en direction, de façon explicite ou implicite, chacun de plusieurs mobiles émetteurs, tels que le mobile M de la figure 5, à partir de signaux reçus par ces N capteurs ; en émission, ces N capteurs réémettent des signaux focalisés vers des mobiles utiles.

Le (N+1)^{ème} capteur C_{N+1} est placé ou conçu de façon. à recevoir des signaux décorrélés des précédents. Pour les traitements de démodulation, on utilise les N+1 capteurs. En relation avec le module 10 de traitement des signaux reçus, l'ensemble formé par les N+1 capteurs permet d'améliorer la réception en réalisant une diversité spatiale ou spatio-temporelle, en utilisant de plus les signaux reçus par le (N+1)^{ème} capteur.

Un module multiplexeur 12 est relié aux N premiers capteurs. Le module 10 de traitement des signaux reçus comprend notamment des circuits d'entrée 14. Ceux des circuits d'entrée 14 qui correspondent aux N premiers capteurs sont reliés au module multiplexeur 12. L'ensemble des circuits d'entrée 14 effectuent des traitements classiques appropriés de conversion, en fréquence intermédiaire ou en bande de base, des signaux reçus, d'échantillonnage éventuel, de conversion éventuelle analogique-numérique, d'amplification.

Le module 10 de traitement des signaux reçus comprend également un module de localisation explicite ou implicite 16 relié à ceux des circuits d'entrée 14 qui correspondent aux N premiers capteurs, et un module de démodulation 18 relié au module de localisation 16 et aux circuits d'entrée 14 des N+1 capteurs C₁, ..., C_{N}, C_{N+1}.

Des circuits de sortie 20 sont reliés à la sortie du module de localisation 16 et à l'entrée du multiplexeur 12, comme le montre la figure 5. Les circuits de sortie 20 effectuent des traitements classiques appropriés d'échantillonnage éventuel, de conversion éventuelle numérique-analogique, de modulation à la fréquence porteuse, d'amplification.

Dans le mode particulier de réalisation de la figure 1, le réseau d'antennes est du type linéaire, cette géométrie n'étant nullement limitative. Il comprend N premiers capteurs C₁, ..., C_{N} mutuellement espacés d'une distance de l'ordre de grandeur d'une demi-longueur d'onde de transmission, notée λ/2 sur la figure 1, λ désignant la longueur d'onde de transmission. Les N premiers capteurs sont avantageusement mais non nécessairement équirépartis. Ce réseau d'antennes comprend également un (N+1)^{ème} capteur C_{N+1}.

Comme on l'a indiqué plus haut, la distance D1 entre le capteur C_{N+1} et l'un quelconque des capteurs C₁, ..., C_{N} peut être réglable et est telle que les signaux reçus par le (N+1)^{ème} capteur soient décorrélés des signaux reçus par les autres capteurs avec une probabilité dépassant un seuil choisi. Le choix de D1 dépend en outre de l'environnement de propagation ; par exemple, il diffère selon que la propagation a lieu dans une région sensiblement dégagée, telle qu'un milieu rural, ou dans une région comprenant des obstacles relativement nombreux, telle qu'un milieu urbain.

Dans le mode particulier de réalisation de la figure 2, le réseau d'antennes est également du type linéaire, cette géométrie n'étant nullement limitative. Il comprend N premiers capteurs C₁, ..., C_{N}, avantageusement mais non nécessairement équirépartis, ayant une polarisation, notée P1, d'un type donné, et un (N+1)^{ème} capteur C_{N+1} ayant une polarisation, notée P2, d'un type différent du précédent. A titre d'exemple non limitatif, les N premiers capteurs peuvent présenter une polarisation de type horizontal, et le (N+1)^{ème} capteur, une polarisation de type vertical.

Dans le mode particulier de réalisation de la figure 3, analogue au mode particulier de réalisation de la figure 1, le réseau d'antennes comprend N premiers capteurs C₁, ..., C_{N} équirépartis sur un cercle et un (N+1)^{ème} capteur placé à une distance D3 de ce cercle. La distance D3 illustrée par la figure 3 peut être choisie de façon analogue à la distance D1 mentionnée plus haut et illustrée par la figure 1.

Dans un autre mode particulier de réalisation, non illustré, le réseau d'antennes comprend N premiers capteurs C₁, ..., C_{N} dont le diagramme d'antenne présente une géométrie d'un type donné, c'est-à-dire avec une largeur et une orientation données du ou des lobes, et un (N+1)^{ème} capteur C_{N+1} dont le diagramme d'antenne présente une géométrie d'un type différent du précédent.

Dans les modes particuliers de réalisation décrits ci-dessus, le (N+1)^{ème} capteur peut également être utilisé en émission, non pour les signaux de trafic, mais pour émettre vers les mobiles des signaux d'une autre nature, tels que des signaux de signalisation ou de contrôle.

A titre d'exemple non limitatif, dans le cas d'un système de radiocommunication avec les mobiles du type GSM, certains signaux de signalisation sont généralement diffusés dans la totalité d'une cellule donnée, et/ou suivant un plan de fréquence différent de celui des signaux de trafic. Dans ce cas, suivant un mode particulier avantageux de réalisation de la présente invention, le (N+1)^{ème} capteur diffuse ces signaux de signalisation dans la totalité de cette cellule.

On a décrit ci-dessus des modes particuliers de réalisation de la présente invention dans lesquels chacun des N+1 capteurs du réseau est utilisé en réception et éventuellement en émission. En variante, comme le montre la figure 4, chacun des N+1 capteurs C₁, C₂, ..., C_{N}, C_{N+1} du réseau peut comprendre deux circuits distincts relativement proches l'un de l'autre, dont l'un est utilisé pour les traitements de réception et l'autre est utilisé pour les traitements éventuels d'émission. Le réseau d'antennes illustré sur la figure 4 est du type linéaire, ce choix de représentation n'étant nullement limitatif. Sur la figure 4, le capteur C₁ comprend deux circuits C₁₁ et C₁₂. De façon analogue, les capteurs C₂, ..., C_{N+1} comprennent également chacun deux circuits distincts. Cette constitution permet d'éviter l'utilisation de diplexeurs.

## Revendications

1. Réseau d'antennes pour station de base de radiocommunication avec des mobiles, comprenant
N premiers capteurs (C₁, ..., C_{N}), N étant un entier supérieur à 2, disposés de façon que le réseau ne présente sensiblement pas d'ambiguïté,
un (N+1)^{ème} capteur (C_{N+1}) placé ou conçu de façon à recevoir des signaux décorrélés des précédents, et
des moyens (10) de traitement des signaux reçus, permettant de localiser, de façon explicite ou implicite, un mobile émetteur à partir des signaux reçus uniquement par les N capteurs, et de combiner ces signaux et les signaux reçus par le (N+1)^{ème} capteur pour améliorer la réception en réalisant une diversité spatiale ou spatio-temporelle.

2. Réseau d'antennes selon la revendication 1, **caractérisé en ce que** la distance mutuelle entre les N premiers capteurs (C₁, ..., C_{N}) est de l'ordre de grandeur d'une demi-longueur d'onde de transmission, et le (N+1)^{ème} capteur (C_{N+1}) est placé à une distance éventuellement réglable de chacun des N premiers capteurs, telle que la décorrélation soit assurée avec une probabilité supérieure à un seuil souhaité, cette distance étant choisie en fonction de ce seuil et du milieu de propagation des signaux.

3. Réseau d'antennes selon la revendication 1, **caractérisé en ce que** les N premiers capteurs (C₁, ..., C_{N}) présentent une polarisation prédéterminée et le (N+1)^{ème} capteur (C_{N+1}) présente une polarisation différente.

4. Réseau d'antennes selon la revendication 1, **caractérisé en ce que** les N premiers capteurs présentent un diagramme d'antenne ayant une géométrie d'un type prédéterminé et le (N+1)^{ème} capteur présente un diagramme d'antenne ayant une géométrie d'un type différent.

5. Réseau d'antennes selon l'une quelconque des revendications 1 à 4, **caractérisé en ce que** chacun des N+1 capteurs (C₁, ..., C_{N}, C_{N+1}) comprend deux circuits distincts, un de ces circuits effectuant les traitements de réception et l'autre circuit effectuant les traitements éventuels d'émission.

## Patentansprüche

1. Antennensystem für eine Basisstation zur Funkkommunikation mit Mobilgeräten, umfassend
- N erste Aufnehmer (C₁, ..., C_{N}), welche derart angeordnet sind, dass das System im Wesentlichen keine Mehrdeutigkeit besitzt, wobei N eine ganze Zahl größer als 2 ist,
- einen (N+1)-ten Aufnehmer (C_{N+1}), welcher zum Empfang von Signalen angeordnet oder ausgelegt ist, die unkorreliert zu den vorhergehenden sind, sowie
- Verarbeitungsmittel (10) zur Verarbeitung der empfangenen Signale, wobei es die Verarbeitungsmittel erlauben, ein sendendes Mobilgerät allein anhand der von den N Aufnehmern empfangenen Signale in expliziter oder impliziter Weise zu lokalisieren sowie diese Signale und die von dem (N+1)-ten Aufnehmer empfangenen Signale zu kombinieren, um den Empfang unter Realisierung von Raum-Diversity oder Raum-Zeit-Diversity zu verbessern.

2. Antennensystem nach Anspruch 1, **dadurch gekennzeichnet, dass** der gegenseitige Abstand zwischen den N ersten Aufnehmern (C₁, ..., C_{N}) im Bereich der Größe einer halben Übertragungswellenlänge liegt und der (N+1)-te Aufnehmer (C_{N+1}) in einem solchen, gegebenenfalls einstellbaren Abstand von jedem der N ersten Aufnehmer angeordnet ist, **dass** die Unkorreliertheit mit einer Wahrscheinlichkeit gewährleistet ist, welche über einer gewünschten Schwelle liegt, wobei dieser Abstand in Abhängigkeit von dieser Schwelle und der Ausbreitungsumgebung der Signale gewählt ist.

3. Antennensystem nach Anspruch 1, **dadurch gekennzeichnet, dass** die N ersten Aufnehmer (C₁, ..., C_{N}) eine vorbestimmte Polarisation haben und der (N+1)-te Aufnehmer (C_{N+1}) eine andere Polarisation hat.

4. Antennensystem nach Anspruch 1, **dadurch gekennzeichnet, dass** die N ersten Aufnehmer ein Antennendiagramm mit einer Geometrie einer vorbestimmten Art aufweisen und der (N+1)-te Aufnehmer ein Antennendiagramm mit einer andersartigen Geometrie aufweist.

5. Antennensystem nach einem der Ansprüche 1 bis 4, **dadurch gekennzeichnet, dass** jeder der N+1 Aufnehmer (C₁, ..., C_{N}, C_{N+1}) zwei gesonderte Schaltkreise aufweist, wobei einer dieser Schaltkreise die Empfangsverarbeitung bewirkt und der andere Schaltkreis gegebenenfalls die Sendeverarbeitung bewirkt.

## Claims

1. Antenna array for base station for radiocommunication with mobile stations, comprising
N first sensors (C_{**1**},...,C_{**N**}), N being an integer greater than 2, arranged so that the array exhibits substantially no ambiguity,
a (N+1)^{**th**} sensor (C_{**N+1**}) placed or designed so as to receive signals which are decorrelated from the previous ones, and
means (10) for processing the signals received, making it possible to locate, in an explicit or implicit manner, a. transmitting mobile from the signals received by the N sensors alone, and to combine these signals and the signals received by the (N+1)^{**th**} sensor so as to improve reception by effecting spatial or spatio-temporal diversity.

2. Antenna array according to Claim 1, **characterized in that** mutual distance between the N first sensors (C_{**1**}, ..., C_{**N**}) is of the order of magnitude of half a transmission wavelength, and the (N+1)^{th} sensor (C_{**N+1**}) is placed at an optionally adjustable distance from each of the N first sensors, such that decorrelation is ensured with a probability greater than a desired threshold, this distance being chosen as a function of this threshold and of the signal propagation medium.

3. Antenna array according to Claim 1, wherein the N first sensors (C_{**1**}**,...,** C_{**N**}) exhibit a predetermined polarization and the (N+1)^{**th**} sensor (C_{**N+1**}) exhibits a different polarization.

4. Antenna array according to claim 1, wherein the N first sensors exhibit an antenna radiation pattern having a geometry of a predetermined type and the (N+1)^{**th**} sensor exhibits an antenna radiation pattern having a geometry of a different type.

5. Antenna array according to any one of Claims 1 to 4, wherein each of the N+1 sensors (C_{**1**}**,...,**C_{**N**}**,**C_{**N+1**}) comprises two distinct circuits, one of these circuits performing the reception processing operations and the other circuit performing any transmission processing operations.
